Europäisches Patentamt

**European Patent Office**

**Office européen des brevets**

(11) Numéro de publication: **0 181 986 B1**

## FASCICULE DE BREVET EUROPEEN

(45) Date de publication de fascicule du brevet:
**11.12.91**

(21) Numéro de dépôt: **84810559.9**

(22) Date de dépôt: **19.11.84**

(51) Int. Cl.⁵: **H02K 13/00**, H02K 13/04,
H01R 39/04

(54) Moteur à courant continu comprenant un rotor à collecteur.

(43) Date de publication de la demande:
**28.05.86 Bulletin 86/22**

(45) Mention de la délivrance du brevet:
**11.12.91 Bulletin 91/50**

(84) Etats contractants désignés:
**AT CH DE FR GB IT LI NL SE**

(56) Documents cités:
**EP-A- 0 107 247**
**FR-A- 1 261 604**
**GB-A- 433 277**
**GB-A- 2 001 206**
**NL-C- 55 377**

(73) Titulaire: **Asgalium S.A.**
**Avenue Léopold-Robert 73a**
**CH-2300 La Chaux-de-Fonds(CH)**

(72) Inventeur: **Heyraud, Marc, Dr.**
**Recorne 24b**
**CH-2300 La Chaux-de-Fonds(CH)**

(74) Mandataire: **Rochat, Daniel Jean et al**
**Bovard SA Ingénieurs-Conseils ACP Optin-**
**genstrasse 16**
**CH-3000 Bern 25(CH)**

Rank Xerox (UK) Business Services

## Description

Il existe actuellement un besoin pour des moteurs à courant continu dont le stator comporte un grand nombre de paires de pôles. De plus, ce besoin se fait sentir plus spécialement dans la construction de moteurs de très petites dimensions. Par exemple, dans le cas d'un moteur à rotor sans fer avec bobinage incliné du type Faulhaber, il est avantageux d'avoir un grand nombre de pôles lorsque l'on veut abaisser le rapport longueur-diamètre du rotor. Dans le cas d'un moteur à rotor plat, il est évident que l'on ne peut obtenir un rotor efficace que si le nombre de parcours radiaux des fils est important. Cela conduit à des têtes de bobine inefficaces si l'on n'augmente pas parallèlement le nombre des paires de pôles.

Toutefois, la réalisation des rotors adaptés à des stators à grand nombre de paires de pôles se heurte à des difficultés en ce qui concerne la constitution du collecteur. En effet, la construction classique des collecteurs pour moteur à courant continu (voir par exemple GB-2 001 206) consiste à assembler le nombre de lamelles nécessaire sur un cylindre, de façon que ces lamelles soient isolées les unes des autres et orientées parallèlement à l'axe du moteur. Ensuite, les extrémités des fils des bobines sont connectées aux lamelles.

On connaissait, dans le domaine des commutateurs destinés à transformer des courants continus en modifiant leur tension, des constructions de collecteurs s'écartant de la construction traditionnelle. Dans le cas spécial où la dimension circonférencielle de chaque segment est beaucoup plus grande que la dimension correspondante des balais, et où l'énergie est transmise par un courant de forte intensité sous une faible tension, le document GB-433 277 décrit un agencement dans lequel chaque segment est solidaire d'une bride annulaire, et le collecteur comporte un arbre central isolé par un manchon sur lequel les brides des différents segments sont engagées. Jusqu'à maintenant l'application de cette construction, ancienne, à des moteurs, n'a jamais été envisagée.

La présente invention vise à apporter une solution au problème des collecteurs pour moteurs CC à grand nombre de paires de pôles en créant une construction comportant un nombre réduit de pièces, facile à fabriquer avec la précision requise et susceptible d'être produite dans des dimensions miniaturisées.

Dans ce but, la présente invention a pour objet un appareil électrique comportant une pluralité de bobines et un collecteur formé de plusieurs pièces annulaires isolées présentant des éléments de contact rigides, connectés de manière permanente aux bobines, maintenus dans des positions relatives fixes, et distribués autour d'un axe, chaque élément de contact étant solidaire d'un élément annulaire de support centré sur le dit axe, caractérisé en ce que, le dit appareil étant un moteur à courant continu comprenant un stator à plusieurs paires de pôles et un rotor équipé du dit collecteur et d'un nombre de bobines qui est égal au produit du nombre de paires de pôles par un entier plus grand que un, le collecteur est formé d'un nombre de pièces annulaires rigides égal au dit nombre entier et chaque pièce annulaire comporte un élément annulaire et plusieurs éléments de contact, ces derniers étant sur chaque pièce annulaire en nombre égal au nombre de paires de pôles, et répartis sur le pourtour de l'élément annulaire.

Les effets et les avantages de l'objet ainsi défini apparaîtront mieux à la lecture de la description qui suit, qui se rapporte à diverses formes d'exécution de l'objet de l'invention.

Dans cette description, on se référera au dessin annexé dont

la fig. 1 est une représentation schématique d'un moteur à courant continu à deux paires de pôles comportant un collecteur de type traditionnel,

les fig. 2 et 3 sont des vues, respectivement en perspective et en coupe axiale partielle, d'un collecteur selon une première forme d'exécution de l'objet de l'invention,

les fig. 4 et 5 sont des vues, respectivement en coupe et en élévation frontale, d'une pièce annulaire entrant dans la constitution d'une seconde forme d'exécution de l'objet de l'invention,

la fig. 6 est une vue schématique en perspective éclatée montrant l'assemblage des pièces constituantes de la seconde forme d'exécution et

la fig. 7 est une vue en perspective schématique illustrant la construction d'une troisième forme d'exécution du collecteur d'un moteur selon l'invention.

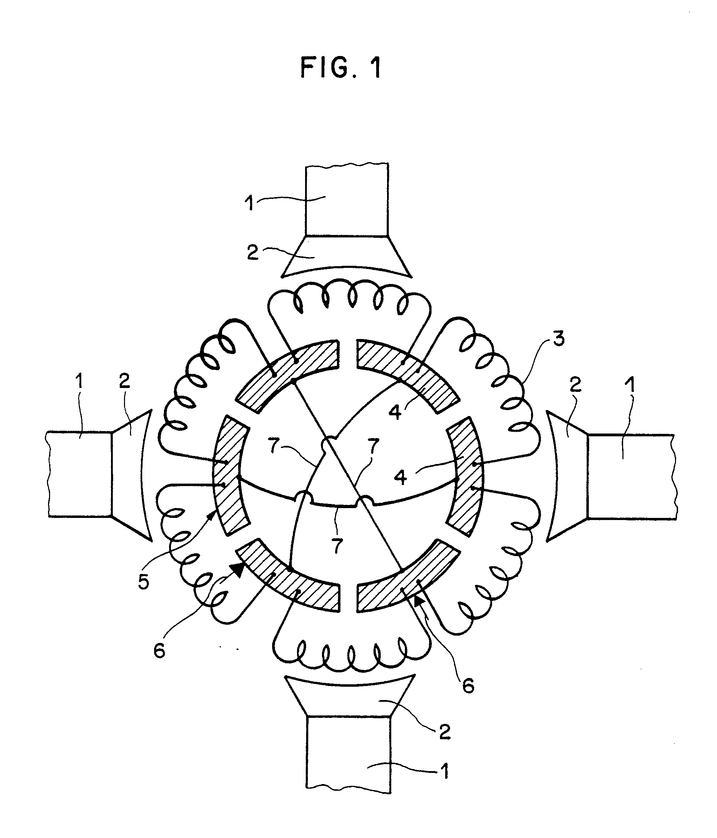

On sait que le stator d'un moteur à courant continu, de type traditionnel, comporte des pièces polaires 1, réparties autour du rotor et munies de semelles 2, à partir desquelles le champ magnétique du stator traverse l'espace où est logé le rotor. Ce dernier comporte un certain nombre d'enroulements 3 qui peuvent être portés par un empilage de tôles, mais qui, dans certains cas, peuvent également être bobinées sur un support sans fer. Les deux extrémités de chaque bobine 3 sont connectées à deux lamelles 4 d'un collecteur 5 contre lequel appuient des balais 6. Le schéma représenté à la fig. 1 correspond au cas d'un moteur à deux paires de pôles dont le rotor comporte trois bobines par paire de pôles, c'est-à-dire six bobines au total, de sorte que, dans ce cas, le collecteur comporte six lamelles parallèles 4. Il est en outre nécessaire d'établir, entre les paires de lamelles homologues, des connexions telles que les connexions 7, qui auront l'allure, représentée à la fig. 1, quand le bobinage rotorique comportera des bobines en parallèle selon le schéma représenté. On peut également considérer un enroulement rotorique formé de bobines en série ou tout autre type d'enroulement. Dans tous les cas, l'augmentation du nombre des paires de pôles conduit à la nécessité d'augmenter le nombre des lamelles du collecteur et le nombre des connexions entre lamelles homologues, ce qui complique considérablement la construction de cette partie du moteur, surtout dans le cas où les dimensions sont réduites.

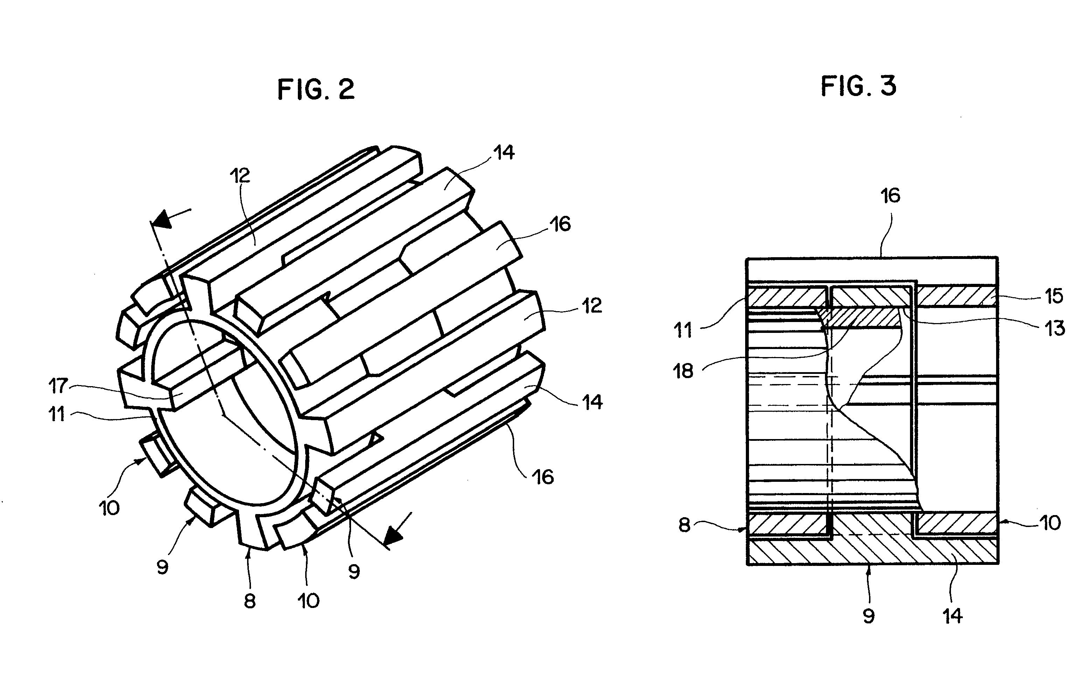

Les fig. 2 et 3 montrent le principe d'une construction de collecteur, susceptible de correspondre au cas d'un moteur à quatre paires de pôles dont l'enroulement rotorique comporte trois bobines par paire de pôles. La partie métallique du collecteur se compose de trois pièces distinctes, 8,9 et 10, toutes trois de forme annulaire. La pièce 8 comporte une première partie 11 en forme d'anneau circulaire, d'épaisseur constante et présentant une largeur inférieure au tiers de la longueur totale du collecteur. De cette zone annulaire 11 s'étendent quatre parties proéminentes 12, réparties à 90° les unes des autres, et qui se prolongent axialement vers la droite à la fig. 2, de façon à former quatre lamelles de collecteur. La pièce annulaire 9 présente la forme visible à la fig. 3. On voit qu'elle est disposée entre la pièce 8 et la pièce 10, coaxialement à ces deux dernières. Elle comporte aussi une zone annulaire circulaire 13, identique à la zone annulaire 11 de la pièce 8 et, en quatre emplacements sur le pourtour de cette zone 13, quatre parties proéminentes 14, qui forment des languettes s'étendant à droite et à gauche de la zone 13. Finalement, la pièce 10 comporte également une zone annulaire circulaire 15 (fig. 3) à partir de laquelle s'étendent vers l'extérieur et axialement des parties proéminentes 16 constituant les lamelles restantes. Chacune des zones annulaires 11, 13, 15 présentent en outre, vers l'intérieur, une nervure 17 qui sert à l'ajustage et à la fixation des différentes pièces les unes par rapport aux autres. Dans la forme d'exécution évoquée ici, le montage des différentes pièces 8, 9 et 10 s'effectue au moyen d'un support tubulaire 18, en matière plastique, qui est engagé à l'intérieur des pièces constitutives du collecteur. Ce support tubulaire peut se prolonger d'un côté ou de l'autre du collecteur, de façon à relier ce dernier au rotor et, le cas échéant, à permettre le montage du rotor sur un arbre séparé ou la mise en place de paliers supportant le rotor.

Le bobinage du rotor n'a pas été représenté. Les extrémités des différentes bobines seront soudées aux pièces 8, 9 et 10 lors de l'assemblage. En outre, les intervalles entre les lamelles pourront être obturés par de la matière isolante, par exemple une matière plastique susceptible de se solidifier, après avoir été mise en place à l'état liquide, la solidification étant provoquée par polymérisation.

En ce qui concerne l'emplacement et le montage des balais, il n'est pas nécessaire de décrire en détail ces particularités étant donné qu'elles sont, dans ce cas, tout à fait traditionnelles.

Alors que la fabrication des différentes pièces constituantes du collecteur représenté aux fig. 2 et 3 nécessiterait des opérations d'étampage ou d'usinage ou, le cas échéant, des opérations de moulage, les collecteurs qui forment la deuxième et la troisième formes d'exécution représentées à titre d'exemple ci-après, comportent des constituants annulaires qui peuvent être fabriqués uniquement par des opérations de découpage, le cas échéant, accompagnées d'opération de pliage. Ces opérations peuvent être effectuées dans des pièces brutes en forme de tôle mince, ce qui permet une large automatisation des opérations.

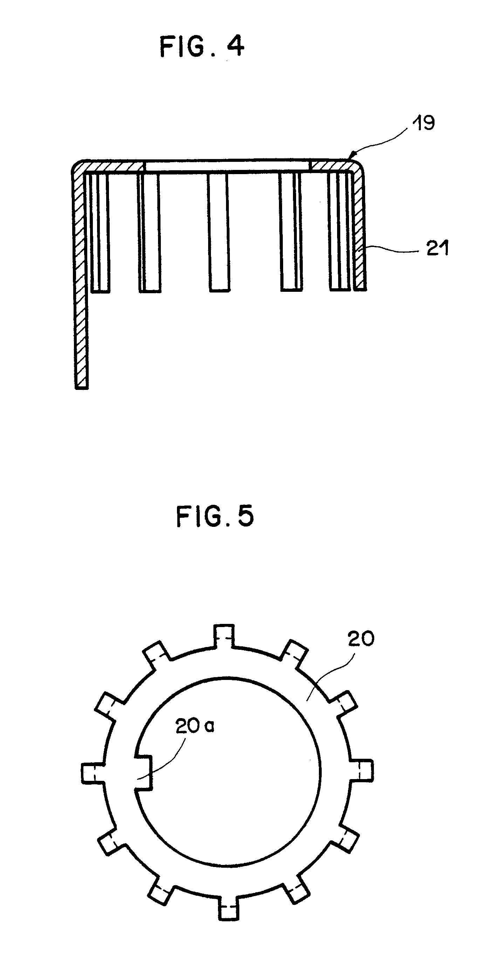

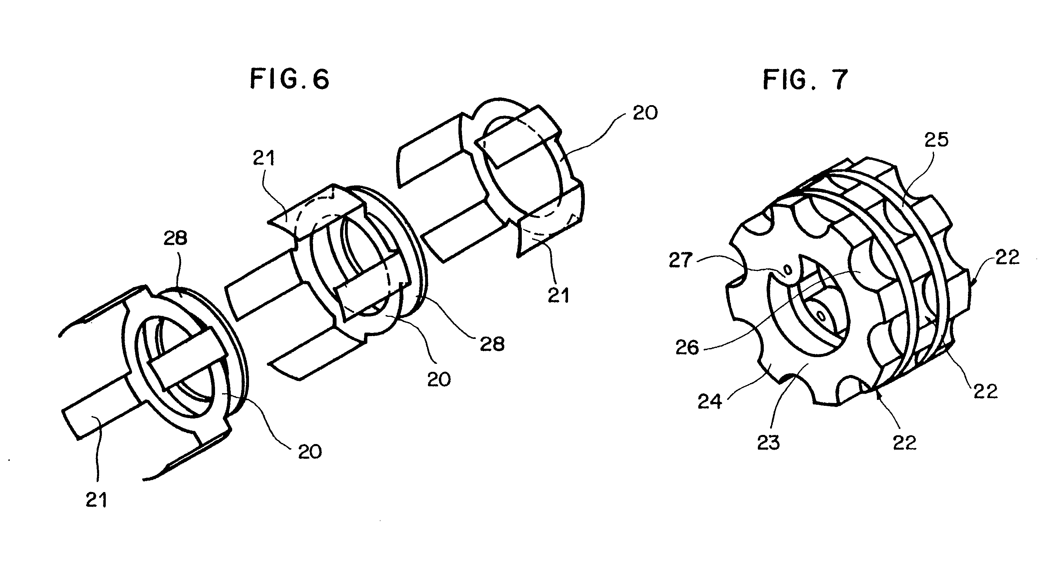

Les fig. 4 et 5 représentent, en coupe et en élévation frontale, une pièce constituante d'un collecteur de la deuxième forme d'exécution. Ce collecteur est destiné a un moteur à 12 paires de pôles et comportant trois bobines par paire de pôles. La pièce constituante 19 est obtenue par découpage et pliage à partir d'un segment de tôle d'argent, ayant une épaisseur qui peut être, par exemple, de l'ordre de 0,3 mm. La pièce 19 comporte une zone annulaire circulaire 20, munie en un point de son pourtour d'un ergot interne 20a. Le long de sa périphérie extérieure, la pièce 19 est découpée avec une série de doigts radiaux 21, qui sont ensuite pliés à angle droit, de façon à s'étendre axialement. Dans cette forme d'exécution, le diamètre extérieur du collecteur est de 7 mm et sa longueur peut varier de 2 à 5 mm, suivant les exécutions. Pour réaliser un collecteur complet, au moyen de trois pièces telles que 19, on les assemble, en intercalant des rondelles isolantes 28, comme le montre la fig. 6. L'ensemble peut être monté sur une pièce tubulaire en matière plastique ou noyé dans une matière isolante assurant la cohésion des pièces. Comme dans la première forme d'exécution, les bobines de l'enroulement rotorique seront soudées sur les pièces 19 lors du montage du rotor.

Enfin, la fig. 7 représente schématiquement l'assemblage de trois pièces annulaires 22, qui peuvent également être en argent ou en un autre métal bon conducteur de l'électricité et qui sont obtenues simplement par des opérations de découpage. Les trois pièces 22 de la fig. 7 présentent chacune une zone annulaire circulaire 23, à partir de laquelle s'étendent des parties proéminentes 24 qui, à la fig. 7, sont au nombre de huit, le collecteur étant destiné à un moteur à huit paires de pôles. Dans cette forme d'exécution, les parties proéminentes 24, qui sont destinées à entrer en contact avec les balais lors de la rotation du collecteur, ne s'étendent pas sur toute la longueur du collecteur lui-même. Comme des couches de matière isolante 25 sont intercalées entre les pièces 22, on voit qu'il est possible de dimensionner les parties proéminentes 24 de façon à réaliser un chevauchement angulaire des zones proéminentes qui doivent commuter successivement. Les échancrures 26, ménagées entre les parties proéminentes 24 auront donc des longueurs périphériques inférieures au double de la longueur des zones 24 et ces échancrures pourront être remplies de matière isolante, ce qui supprimera les fentes génératrices de bruit, ou de vibration des balais et d'accumulation des déchets. En outre, la possibilité de remplir ces échancrures de matière isolante permettra de prévoir un remplissage poreux, susceptible de retenir une certaine réserve de lubrifiant.

Avec cette forme d'exécution, on peut également disposer plusieurs balais à des angles électriques différents sur la périphérie du collecteur, ce qui permet de mettre en oeuvre sur le rotor des fonctions spéciales supplémentaires. Ainsi,la construction décrite ici permet par exemple de prévoir des pièces annulaires supplémentaires et des balais correspondants permettant de réaliser une commutation commandée en fonction du temps depuis l'extérieur. On sait que, dans le cas de moteurs pas à pas, du type à courant continu, cette commutation en fonction du temps représente le fonctionnement normal du moteur. La construction décrite permet donc de réaliser des moteurs pas à pas ayant un grand nombre de paires de pôles et construits selon le mode des moteurs à courant continu, ce qui n'était pas possible jusqu'à maintenant.

On notera finalement que dans la forme d'exécution de la fig. 7, chacune des pièces 22 est également pourvue d'une partie saillante interne 27, cette partie étant destinée à recevoir une broche (non représentée) assurant la connexion entre la pièce 22 et les bobines.

Dans les formes d'exécution décrites ci-dessus, les pièces annulaires constituant le collecteur sont en argent. Elles peuvent aussi être en un alliage à base d'argent ou en un autre métal bon conducteur tel que le cuivre ou le palladium. Dans ce cas, elles seront revêtues d'une couche d'or, de platine, de rhodium ou d'un autre métal du même genre.

## Revendications

1. Appareil électrique comportant une pluralité de bobines (3) et un collecteur (4, 7) formé de plusieurs pièces annulaires isolées présentant des éléments de contact rigides, connectés de manière permanente aux bobines, maintenus dans des positions relatives fixes, et distribués autour d'un axe, chaque élément de contact étant solidaire d'un élément annulaire de support centré sur le dit axe, caractérisé en ce que, le dit appareil étant un moteur à courant continu comprenant un stator à plusieurs paires de pôles (1, 2, 6) et un rotor équipé du dit collecteur (5) et d'un nombre de bobines (3)qui est égal au produit du nombre de paires de pôles par un entier plus grand que un, le collecteur (8, 9, 10; 20, 21, 28; 22, 25) est formé d'un nombre de pièces annulaires rigides (8, 9, 10; 19; 22) égal au dit nombre entier et chaque pièce annulaire comporte un élément annulaire (11, 13, 15; 20; 23) et plusieurs éléments de contact (12, 14, 16; 21; 24), ces derniers étant sur chaque pièce annulaire en nombre égal au nombre de paires de pôles, et répartis sur le pourtour de l'élément annulaire.

2. Appareil selon la revendication 1, caractérisé en ce que chacune des dites pièces (8,9,10;22) présente une épaisseur constante dans toutes ses parties.

3. Appareil selon la revendication 2, caractérisé en ce que chacune des dites pièces constituantes (19) du collecteur comporte une zone annulaire plane (20) disposée perpendiculairement à l'axe du collecteur et des lamelles (21) découpées formant des parties proéminentes et pliées de manière à s'étendre parallèlement à l'axe.

4. Appareil selon la revendication 3, caractérisé en ce que les dites zones annulaires planes (20) de toutes les pièces constituantes (19) du collecteur sont disposées parallèlement les unes aux autres et au voisinage les unes des autres à une extrémité du collecteur, toutes les dites lamelles (21) s'étendant d'un même côté des dites zones annulaires.

5. Appareil selon la revendication 1, caractérisé en ce que les dites pièces constituantes (22) du collecteur sont des anneaux plats montés parallèlement les uns aux autres et orientés perpendiculairement à l'axe commun de ces anneaux.

6. Appareil selon la revendication 5, caractérisé en ce que les dites parties proéminentes (24) des pièces annulaires (22) sont limitées par des découpures ménagées dans le bord extérieur des dits anneaux plats.

7. Appareil selon l'une quelconque des revendications 1 à 6, caractérisé en ce que les dites pièces annulaires (8,9,10) sont supportées par une pièce tubulaire (18) en matière plastique engagée à l'intérieur des anneaux.

8. Appareil selon la revendication 1, caractérisé en ce que les dites pièces annulaires sont en un métal à base d'argent.

9. Appareil selon la revendication 1, caractérisé en ce que les dites pièces annulaires sont en un métal tel que le palladium ou le cuivre et portent un revêtement d'or, de platine, de rhodium ou d'un autre métal du même genre.

## Claims

1. Electrical apparatus comprising a plurality of coils (3) and a commutator (4, 7) formed of several insulated annular pieces having rigid contact elements connected in a permanent manner to the coils, maintained in relatively fixed positions, and distributed around an axis, each contact element being integral with an annular support element centered on said axis, characterized in that, said apparatus being a DC motor comprising a stator with several pairs of poles (1, 2, 6) and a rotor equipped with said commutator (5) and a number of coils (3) which is equal to the number of pairs of poles multiplied by an integer greater than one, the commutator (8, 9, 10; 20, 28; 22, 25) is formed of a number of rigid annular pieces (8, 9, 10; 19; 22) equal to said integer and each annular piece comprises an annular element (11, 13, 15; 20; 23) and several contact elements (12, 14, 16; 21; 24), the latter being on each annular piece in number equal to the number of pairs of poles, and distributed on the periphery of the annular element.

2. Apparatus according to claim 1, characterized in that each of said pieces (8, 9, 10; 22) displays a uniform thickness throughout.

3. Apparatus according to claim 2, characterized in that each of said constituent pieces (19) of the commutator comprises a flat annular zone (20) disposed perpendicularly to the axis of the commutator and blanked segments (21) forming protuberant parts and bent to extend parallel to said axis.

4. Apparatus according to claim 3, characterized in that said flat annular zones (20) of all the constituent pieces (19) of the commutator are disposed parallel to one another and in the vicinity of one another at one end of the commutator, all of said segments (21) extending on the same side of said annular zones.

5. Apparatus according to claim 1, characterized in that said constituent pieces (22) of the commutator are flat rings mounted parallel to one another and oriented perpendicularly to the common axis of said rings.

6. Apparatus according to claim 5, characterized in that protuberant parts (24) of the annular pieces (22) are limited by indentations in the outer edges of said flat rings.

7. Apparatus according to one of the claims 1 to 6, characterized in that said annular pieces (8, 9, 10) are supported by a tubular piece (17) of plastic material fitted on the inside of said rings.

8. Apparatus according to claim 1, characterized in that said annular pieces are of a silver-base alloy.

9. Apparatus according to claim 1, characterized in that said annular pieces are of a metal such as palladium or copper and have a plating of gold, platinum, rhodium or another metal of the same kind.

## Patentansprüche

1. Elektrisches Gerät mit einer Mehrzahl von Spulen (3) und einem aus mehreren isolierten ringförmigen Teilen gebildeten Kollektor (4, 7), welcher mehrere starre Kontaktelemente aufweist die mit den Spulen dauernd verbunden, in verhältnismässig festen Positionen gehalten und um eine Achse verteilt sind, wobei jedes Kontaktelement mit einem ringförmigen, auf der Achse zentrierten Tragelement einstückig hergestellt ist, dadurch gekennzeichnet, dass das Gerät ein Gleichstrommotor mit einem aus mehreren Polpaaren (1, 2, 6) bestehenden Stator und einem Rotor ist, welcher letztere mit dem genannten Kollektor (5) und einer Anzahl Spulen (3) ausgerüstet ist, wobei die Anzahl der Spulen dem Produkt, gebildet aus der Anzahl Polpaare und einer ganzen Zahl die grösser als eins ist, entspricht, und dass der Kollektor (8, 9, 10; 20, 21, 28; 22, 25) aus einer Anzahl starrer ringförmiger Teile (8, 9, 10; 19; 22) gebidet ist, wobei die Anzahl der genannten ganzen Zahl entspricht und jeder ringförmige Teil ein ringförmiges Element (11, 13, 15;

22; 23) und mehrere Kontaktelemente (12, 14, 16; 21; 24) aufweist, welche letzteren an jedem ringförmigen Teil in gleicher Anzahl wie die Anzahl der Polpaare angeordnet und über den äusseren Umfang des ringförmigen Elementes verteilt sind.

2. Gerät nach Anspruch 1, dadurch gekennzeichnet, dass jeder der genannten Teile (8, 9, 10; 22) in allen seinen Bereichen eine konstante Dicke aufweist.

3. Gerät nach Anspruch 2, dadurch gekennzeichnet, dass jeder der genannten Bauteile (19) des Kollektors eine ringförmige, plane Zone (20), welche rechtwinklig zur Achse des Kollektors angeordnet ist, und ausgeschnittene Lamellen (21), welche vorspringende und abgebogene Bereiche bilden, indem sie sich parallel zur Achse erstrecken, aufweist.

4. Gerät nach Anspruch 3, dadurch gekennzeichnet, dass die genannten ringförmigen, planen Zonen (20) von allen Bauteilen (19) des Kollektors parallel zueinander und in der Nähe eines der Kollektorenden angeordnet sind, wobei sich alle die genannten Lamellen (21) auf die eine gleiche Seite der genannten Zonen erstrecken.

5. Gerät nach Anspruchs 1, dadurch gekennzeichnet, dass die genannten Bauteile (22) des Kollektors flache Ringe sind, welche parallel zueinander montiert und rechtwinklig zur ihrer gemeinsamen Achse ausgerichtet sind.

6. Gerät nach Anspruch 5, dadurch gekennzeichnet, dass die ausgeschnittenen Bereiche (24) der ringförmigen Teile (22) durch am äusseren Rand der genannten flachen Ringe angebrachte Ausschnitte begrenzt sind.

7. Gerät nach einem der Ansprüche 1 bis 6, dadurch gekennzeichnet, dass die ringförmigen Teile (8, 9, 10) durch einen rohrförmigen Teil (18), welcher aus Kunststoff hergestellt und im Innern der Ringe angeordnet ist, getragen sind.

8. Gerät nach Anspruch 1, dadurch gekennzeichnet, dass die genannten ringförmigen Teile aus einem auf Silber basierenden Metall hergestellt sind.

9. Gerät nach Anspruch 1, dadurch gekennzeichnet, dass die genannten ringförmigen Teile aus einem Metall, wie Palladium oder Kupfer hergestellt sind und einen Ueberzug aus Gold, Platin, Rhodium oder einem anderen Metall mit ähnlichen Eigenschaften aufweisen.

# FIG. 1

FIG. 3

FIG. 2

# FIG. 4

# FIG. 5

FIG.6

FIG. 7

EP 0 181 986 B1